# FASCICULE DE BREVET EUROPEEN

(11) **EP 3 092 702 B1**
(45) Date de publication et mention de la délivrance du brevet: **27.07.2022**
(21) Numéro de dépôt: 14833272.9
(22) Date de dépôt: 22.12.2014
(51) Int. Cl.: H02K 1/276, H02K 15/03

(54) **MACHINE ÉLECTRIQUE À AIMANTS PERMANENTS INSÉRÉS À FORCE**
ELEKTRISCHE MASCHINE MIT EINGEPRESSTEN PERMANENTMAGNETEN
ELECTRIC MACHINE WITH PRESS-FITTED PERMANENT MAGNETS

(30) Priorité: 09.01.2014 FR 1450158
(43) Date de publication de la demande: 16.11.2016
(73) Titulaire: Moteurs Leroy-Somer, 16915 Angouleme Cedex 9 (FR)
(72) Inventeur: MARINO, Alban, F-16230 Nanclars (FR); TURCAT, François, F-16330 Montignac/Charente (FR); DUFAU, Stéphane, F-16000 Angouleme (FR); PEREIRA, Mario, 16120 Chateauneuf sur Charente (FR)
(74) Mandataire: Nony
(86) Numéro de dépôt international: PCT/IB2014/067207
(87) Numéro de publication internationale: WO 2015/104614

(56) Documents cités:
- JP-A- 2004 328 819
- JP-A- 2007 336 671
- US-A- 5 679 995
- US-A1- 2013 334 910

## Description

La présente invention concerne les machines électriques tournantes et notamment celles comportant un rotor composé d'une masse magnétique formée par un assemblage de tôles magnétiques et d'aimants permanents.

### Process

De façon générale, les aimants permanents peuvent être disposés en surface, faisant directement face à l'entrefer ou, en variante, être disposés à l'intérieur de la masse magnétique, dans des logements de cette dernière, le rotor étant alors qualifié de « rotor à aimants enterrés ».

Dans ce dernier cas, il est nécessaire d'assurer un blocage mécanique radial et/ou axial des aimants dans leurs logements, ce blocage devant être suffisant afin d'éviter l'endommagement des aimants et permettre le bon fonctionnement de la machine. En effet, en cas de calage insuffisant, les aimants peuvent être soumis à des micro-déplacements, lesquels peuvent conduire à la destruction des aimants, à une dégradation des performances électriques et magnétiques de la machine et à un défaut d'équilibrage.

Pour fixer les aimants dans leurs logements, plusieurs techniques sont aujourd'hui appliquées, telle que l'utilisation de colle, d'une forme spécifique d'aimant et de logement correspondant, par exemple l'utilisation d'aimants ayant une section transversale trapézoïdale, l'imprégnation de l'aimant dans son logement après sa mise en place, ou encore le blocage par ajout d'une pièce déformable telle qu'une cale. Cependant, ces techniques présentent certains inconvénients. Leur mise en œuvre peut être délicate et coûteuse. Par exemple, un processus de collage des aimants dans les logements peut être contraignant en ce qui concerne les conditions de travail, peut poser un problème de durabilité dans le temps de l'assemblage pour certaines applications, et rend la récupération des aimants pratiquement impossible sans détérioration.

En ce qui concerne l'imprégnation, il s'agit d'un procédé long, très coûteux et encombrant en termes de mise en œuvre, compte-tenu de la nécessité d'utiliser des bacs à vernis et des fours. De plus, cela impose une contrainte thermique liée à la démagnétisation des aimants (la température d'imprégnation devant être inférieur à la limite thermique engendrant une démagnétisation des aimants) et rend également la récupération des aimants impossible sans détérioration.

L'utilisation d'aimants ayant une forme spécifique n'est pas toujours possible dans la mesure où de telles formes peuvent compliquer la réalisation de la tôle magnétique et augmenter le coût des outils de découpe et ainsi le coût total de fabrication de la machine.

### Influence sur les performances

Une performance électromagnétique optimale est obtenue lorsqu'un aimant enterré est en contact parfait sur chacune de ses deux faces polaires Nord et Sud avec la masse magnétique dans laquelle il est inséré, le passage du flux magnétique des aimants vers la masse magnétique étant maximisé.

Cependant, il existe en général un jeu entre les aimants et leurs logements dans la masse magnétique dans laquelle ils sont insérés, constituant ainsi un entrefer du point de vue magnétique, qui induit nécessairement une diminution des performances électromagnétiques de la machine. Un tel jeu est lié aux contraintes de fabrication qui ne permettent pas, pour des coûts raisonnables, de respecter des dimensions très précises dans le découpage de la masse magnétique ou dans la conception des aimants. Un jeu peut également être dû au fait que, les aimants étant sensibles à la corrosion, il peut être nécessaire de les recouvrir d'un revêtement protecteur induisant également une incertitude sur leurs dimensions.

En outre, les contraintes de montage nécessitent de conserver un certain jeu entre les aimants et les logements de la masse magnétique, de manière à faciliter l'insertion des aimants dans cette dernière, notamment lorsque la masse magnétique est formée d'un empilement de tôles magnétiques minces. En effet, dans ce cas, les parois de la masse magnétique peuvent ne pas être parfaitement rectilignes compte tenu du fait qu'elles sont constituées d'un empilement de tôles minces, ce qui peut nécessiter un jeu de montage encore plus important. On peut avoir de manière classique un intervalle de tolérance de +/-0,2 mm dans les dimensions des aimants. De plus, il peut être nécessaire de prévoir un jeu de montage pouvant atteindre 0,1 mm, mieux 0,15 mm de part et d'autre des aimants pour le montage. Au final, on peut obtenir de manière classique un jeu de l'ordre de 0,25 à 0,5 mm, de préférence de 0,25 à 0,35 mm par aimant, ce qui est loin d'être négligeable par rapport aux entrefers usuels entre rotor et stator, couramment rencontrés sur les machines électriques de faible à moyenne puissance, qui sont de l'ordre de 0,5 mm à 1 mm.

Dans le cas où la machine comporte plusieurs aimants disposés en plusieurs rangées par pôle dans la masse magnétique, les jeux des aimants des différentes rangées s'additionnent et affaiblissent d'autant les performances magnétiques de la machine.

La demande JP 2007-336671 divulgue des aimants présentant des creux qui s'accouplent avec des ergots présents dans logements.

Le brevet US 5679995 divulgue des logements comportant des ergots sur leurs bords. Ces ergots fléchissent ou se déforment de manière plastique pour maintenir les aimants permanents dans les logements.

La demande JP 2004-328819 divulgue l'usage de ressorts dans des logements pour y serrer des aimants. La demande US 2013/0334910 décrit des logements ayant des rainures pour faciliter le passage de la résine de fixation le long des bords des aimants.

JP 2007-336671 divulgue des tôles magnétiques comportant des fentes présentant des protubérances qui s'accouplent avec des creux correspondants présents sur les aimants.

US 5679995 décrit des tôles magnétiques comportant des protubérances présentes sur les bords des logements pour serrer les aimants permanents. Ces protubérances se fléchissent lors de l'insertion des aimants dans les logements.

JP 2004-328819 divulgue l'usage de ressorts dans des logements pour y serrer des aimants.

US 2013/0334910 décrit des logements ayant des rainures et des creux pour faciliter le passage de la résine.

Il existe un besoin pour améliorer encore les performances magnétiques des machines tournantes à aimants permanents et réduire leurs coûts de fabrication et de montage.

L'invention a ainsi pour objet, selon l'un de ses aspects, un procédé de fabrication d'une machine électrique selon la revendication 1 et une machine électrique tournante selon la revendication 15.

L'invention permet une mise en place très rapide des aimants dans leurs logements et relativement peu coûteuse.

Par exemple, un outil d'insertion simple, de préférence une presse de petite taille et un support réalisé dans un matériau non magnétique, suffisent si les aimants permanents sont préalablement aimantés. Le gain de productivité comparé à une technique avec collage et polymérisation ou avec une imprégnation est dès lors non négligeable. L'industrialisation est plus aisée par rapport à l'état de la technique.

L'invention produit des résultats particulièrement satisfaisants pour des machines dont la valeur de l'entrefer parasite est comprise entre 0 et 10 fois, mieux entre 0 et 3 fois, la valeur de l'entrefer rotor/stator, cette valeur permettant de ne pas affecter de façon trop importante les performances de la machine.

L'invention permet aussi un maintien de l'ensemble des tôles via les aimants, ce qui permet d'éviter si on le souhaite le maintien des tôles usuellement obtenu par agrafage, collage ou soudage.

De plus, la résistance au déplacement étant proportionnelle à l'étendue des surfaces de contact, le risque d'une diminution du serrage lors d'éventuels déplacements est relativement faible, tout en permettant un jeu admissible relativement important pour le blocage.

L'épaisseur de chacune des tôles magnétiques est par exemple comprise entre 0,2 mm et 1mm, mieux entre 0,2 mm et 0,5 mm.

Chaque logement peut contenir un ou une pluralité d'aimants permanents. Par exemple, au moins l'un des logements peut recevoir une pluralité d'aimant permanents. Dans ce cas, les pôles S sont orientés tous d'un même côté du logement et les pôles Nord de l'autre.

Les logements peuvent avoir chacun, en section transversale perpendiculairement à l'axe de rotation de la machine, une forme générale allongée suivant un axe X, cet axe X étant de préférence sensiblement parallèle aux faces polaires du ou des aimants reçus dans le logement.

De préférence, les logements sont de section transversale constante selon l'axe de rotation de la machine.

Les aimants permanents sont de préférence en ferrite, car outre le fait que les ferrites sont moins coûteuses que les aimants à base de terres rares, leur dureté permet de les utiliser pour couper les ergots à leur sommet lors de l'insertion des aimants.

Les aimants peuvent avoir, en section transversale, une forme générale rectangulaire ou trapézoïdale. Les faces polaires d'un aimant sont de préférence les faces correspondant aux côtés les plus longs de l'aimant.

Le nombre d'ergots par logement peut varier, notamment en fonction du nombre d'aimants reçus dans le logement. De préférence, les logements présentent, en section transversale, au moins deux, mieux quatre, ergots par aimant.

Par exemple, les logements présentent, en section transversale perpendiculairement à l'axe de rotation de la machine, au moins un ergot, mieux deux ergots, par aimant, de préférence sur chacun des côtés opposés du logement de part et d'autre de l'axe X. De préférence, le nombre d'ergots est identique sur chacun des côtés opposés du logement de part et d'autre de l'axe X. En variante, le nombre d'ergots par aimant peut être différent de deux et de quatre.

Les ergots peuvent être également présents sur les petits côtés des logements, le cas échéant.

Au moins dans un logement, les ergots peuvent être tous situés sur un seul côté, de préférence un grand côté.

De préférence, la distance e entre le sommet d'un ergot et l'extrémité longitudinale adjacente de l'aimant à son contact est supérieure ou égale à *l*/5, où *l* désigne la longueur de l'aimant.

Par exemple, une distance e comprise entre *l*/3 et *l*/4 permet d'éviter de trop solliciter les tôles en flexion, notamment dans le cas où les logements successifs sont proches.

Les ergots sont par exemple de forme arrondie ou tronquée à leur sommet avant la mise en place des aimants.

En variante, les ergots peuvent avoir des formes plates ou pointues à leur sommet avant la mise en place des aimants.

De préférence, les ergots sont en contact avec les aimants par leur sommet.

De préférence, les deux faces polaires des aimants sont en contact avec les ergots. Par exemple, dans un logement recevant une pluralité d'aimants, chaque aimant est en contact avec les ergots sur chacune de ses faces polaires.

Par exemple, les faces polaires des aimants sont de forme plane, et sont de préférence dépourvues d'encoche.

De préférence, les ergots situés sur les côtés opposés d'un même logement se font face. Par exemple, quatre ergots par aimant, soit deux fois deux ergots en vis-à-vis, permet d'équilibrer les efforts sur l'aimant et d'éviter d'éventuels phénomènes de flexion.

En variante, les ergots peuvent être décalés, par exemple, dans leurs positions suivant l'axe longitudinal du logement, observé en section transversale perpendiculairement à l'axe de rotation de la machine.

De préférence, la distance *d* entre le sommet d'un ergot et le côté du logement auquel se raccorde ledit ergot est, avant la mise en place des aimants, comprise entre 0,01 mm et 0,5 mm, mieux entre 0,25 mm et 0,35 mm. Les ergots peuvent être de rayon de courbure compris entre 0,1 mm et 5 cm.

Les ergots peuvent être présents sur chaque tôle de l'empilement de tôles, de façon à se superposer, c'est-à-dire que toutes les tôles comportent au même emplacement un ergot et les ergots des différentes tôles se superposent.

En variante, au moins une tôle peut ne pas avoir d'ergots. Par exemple, seule une tôle sur *n* dans l'empilement, où *n* est un entier supérieur à 1, présentent des ergots, avec *n* de préférence égal à 2, 3 ou 4.

Au moins un logement peut présenter au moins une butée, contre laquelle vient en appui par une extrémité longitudinale un aimant reçu dans ledit logement.

De préférence, les butées se situent près des extrémités des logements et un aimant est en contact avec une butée contre un flanc de celle-ci. La hauteur D de la butée est de préférence comprise entre 1 mm et 3 mm.

Les ergots sont de préférence formés par découpe des tôles magnétiques.

Les aimants permanents sont insérés à force dans les logements.

Les logements peuvent être déformés lors de l'insertion des aimants permanents, par exemple à la presse. Les aimants permanents, réalisés en matière plus dure que l'empilement de tôles magnétique, peuvent déformer les ergots et créer ainsi un montage sans jeu.

Les ergots des tôles magnétiques sont découpés par les aimants permanents lors de l'insertion des aimants permanents dans les logements, les aimants permanents ayant des arêtes vives.

Dans une variante non couverte pas l'invention, les aimants peuvent être insérés dans les logements sans entraîner le découpage des ergots de serrage, les aimants permanents ayant de préférence des arêtes chanfreinées.

Les aimants ne sont pas en contact avec les tôles au niveau de leurs extrémités longitudinales afin de faciliter la coupe des ergots de serrage.

L'utilisation de tôles empilées réduit la propagation des microfissures, qui tendent à apparaître sur les coins avant des aimants permanents lors de l'insertion.

L'invention pourra être mieux comprise à la lecture de la description détaillée qui va suivre, d'exemples de mise en œuvre non limitatifs de celle-ci, et à l'examen du dessin annexé, sur lequel :
- la figure 1 est une vue schématique d'un empilement de tôles d'une masse magnétique rotoriques conforme à l'invention,
- la figure 2 représente une vue de dessus de l'empilement de la figure 1,
- la figure 3 représente une vue de détail et partielle de l'empilement de la figure 2, avant l'insertion des aimants permanents,
- les figures 4 et 5 représentent respectivement un logement avec et sans aimant permanent,
- la figure 6 représente isolément à échelle agrandie un ergot de serrage,
- les figures 7a et 7b représentent les zones A et B de la figure 3,
- les figures 8a-c illustrent des exemples de répartition des ergots de serrage dans le sens de l'épaisseur de l'empilement
- la figure 9 illustre la déformation d'un logement lors de la mise en place d'un aimant permanent, et
- les figures 10a et 10b représentent un ergot de serrage avant et après découpage de son sommet par un aimant permanent.

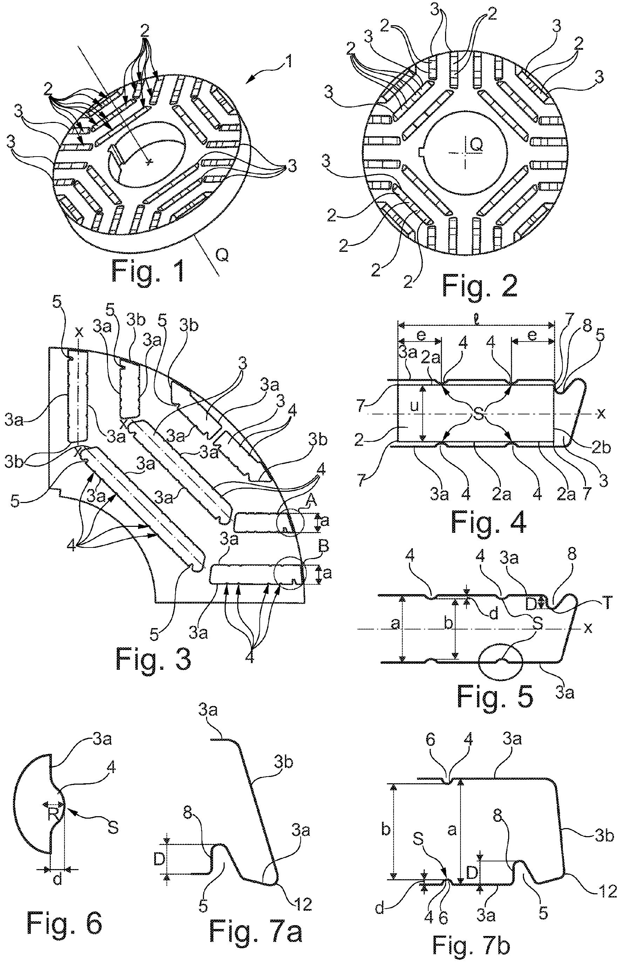

On a représenté aux figures 1 et 2 une masse rotorique 1, d'axe de rotation Q, comportant des logements 3 recevant des aimants permanents 2.

La masse rotorique 1 est formée d'un empilement de tôles rotoriques magnétiques.

Les logements 3 peuvent comporter chacun un seul aimant 2 ou plusieurs aimants 2 insérés dans un même logement 3.

Les logements 3 sont de forme allongée, chacun suivant un axe longitudinal X, de préférence rectiligne. Les logements 3 présentent, comme illustré à la figure 3, des ergots 4 sur chacun de leurs grands côtés opposés 3a.

Les logements 3 peuvent comporter des butées de positionnement 5, au nombre d'une ou deux par logement 3, se raccordant à un même grand côté 3a.

Dans l'exemple illustré aux figures 4-6, le logement 3 présente quatre ergots 4, au nombre de deux par grand côté 3a. Les ergots 4 se font face et enserrent entre eux l'aimant 2.

Les ergots 4 sont, au moins avant la mise en place des aimants 2, de forme arrondie de sommet S et de rayon de courbure R égal à 0,5mm. Une telle forme permet une réalisation facile des logements 3 avec les ergots 4 par un outil de découpe, et assure une robustesse suffisante.

La distance e suivant l'axe X, visible sur la figure 4, entre le sommet S d'un ergot 4 et l'extrémité longitudinale 7 adjacente de l'aimant 2 correspondant est comprise bornes incluses entre 1/4 et 1/3 de la longueur *l* totale de l'aimant 2, de préférence est de *l*/3,6 ou de *l*/3.

L'aimant 2 repose sur les ergots 4 par ses faces polaires 2a sensiblement parallèles à l'axe longitudinal X et vient au contact d'un flan 8 de la butée 5 par sa face d'extrémité 2b.

La largeur a d'un logement 3, mesurée perpendiculairement à l'axe X, est par exemple plus grande de 0,5mm à 0,7 mm que l'écart *u* entre deux sommets S des ergots 4 se faisant face.

Par exemple, dans le cas où la largeur *a* d'un logement 3 est 0,6 mm plus grande que l'écart *u* entre deux sommets *S* d'ergots 4 se faisant face, un aimant 2 permanent, par exemple rectangulaire, ayant une largeur *u* de 0,3 mm plus petite que la largeur *a* du logement permet un serrage de 0,3 mm au niveau des ergots 4.

La distance *d* entre le sommet S d'un ergot 4 et le côté 3a du logement portant l'ergot 4 est par exemple, avant l'insertion de l'aimant, de 0,3 mm. La hauteur D d'une butée 5 est par exemple de 2 mm.

Tous les logements 3 de l'empilement de tôles peuvent avoir la même largeur a.

Les logements 3 peuvent présenter des formes différentes entre la butée 5 et le petit côté 3b, comme illustré aux figure 7a et 7b.

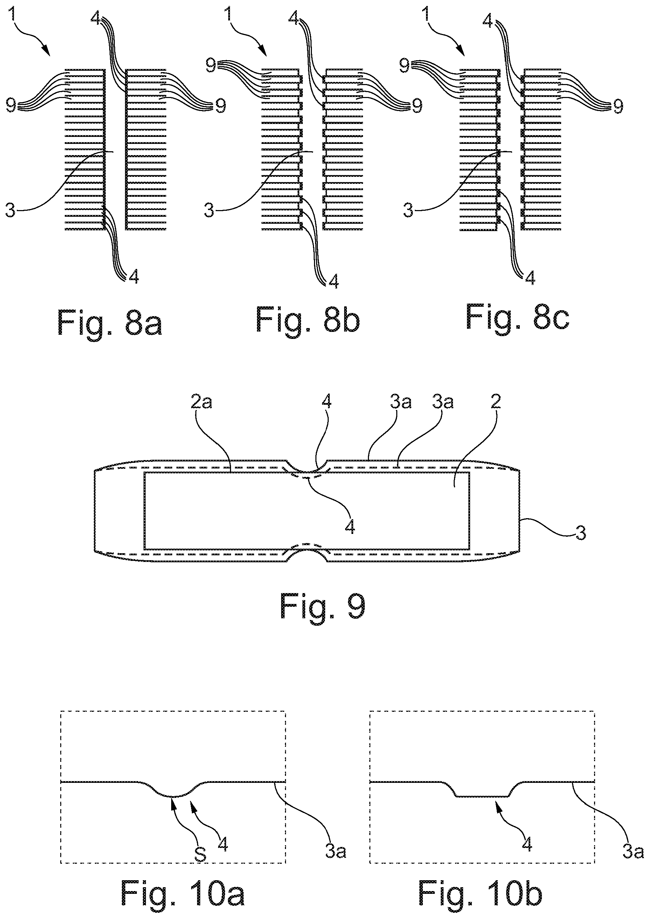

Toutes les tôles 9 de l'empilement peuvent être munies chacune d'un ergot 4 et les ergots 4 peuvent se superposer, comme illustré à la figure 8a. En variante, comme illustré sur la figure 8b, une tôle 9 sur deux présente des ergots 4, les ergots 4 se faisant face sur les côtés opposés 3a du logement 3.

Dans la variante illustrée à la figure 8c, les ergots 4 alternent d'une tôle à l'autre sur les côtés opposés 3a du logement 3.

On a représenté à la figure 9 par des lignes pointillées un logement avant l'insertion d'un aimant 2 et en trait plein le même logement déformé après l'insertion d'un aimant, en raison du serrage de l'aimant 2 au niveau des ergots 4.

On a illustré aux figures 10a et 10b le découpage des ergots par les aimants lors de l'insertion de ces derniers dans leurs logements.

L'ergot 4, de forme arrondie avant l'insertion de l'aimant, est découpé à son sommet après l'insertion de l'aimant. L'ergot ainsi découpé subit par exemple une réduction de hauteur comprise entre 1/10 et 1/2 de sa hauteur initiale.

Par exemple, les ergots 4 peuvent être espacés plus d'une tôle sur deux dans des variantes des exemples des figures 8b et 8c.

Les aimants peuvent être mis en place dans l'empilement en utilisant un aimant pour pousser l'autre. Par exemple, deux aimants de chacun 40 mm de profondeur sont insérés de la sorte.

## Revendications

1. Procédé de fabrication d'une machine électrique tournante comportant :
- une masse magnétique rotorique (1), formée d'un empilement de tôles magnétiques (9) superposées et présentant des logements (3),
- une pluralité d'aimants permanents (2) en matière plus dure que l'empilement de tôles magnétiques (9) insérés dans les logements (3), les logements (3) présentant une pluralité d'ergots (4) de serrage des aimants permanents (2) dans les logements (3),
procédé dans lequel les ergots (4) de serrage des tôles (9) magnétiques sont découpés à leur sommet par les aimants permanents (2) lors de l'insertion des aimants permanents (2) dans les logements (3), les aimants permanents (2) ayant des arêtes vives, et les aimants permanents (2) sont insérés à force dans les logements (3) et ne sont pas en contact avec les tôles magnétiques (9) au niveau de leurs extrémités longitudinales afin de faciliter la coupe des ergots (4) de serrage.

2. Procédé de fabrication d'une machine électrique tournante selon la revendication précédente, dans lequel les ergots (4) de serrage sont formés par découpe des tôles magnétiques (9).

3. Procédé de fabrication d'une machine électrique tournante selon la revendication 1 ou 2, les aimants permanents (2) étant en ferrite.

4. Procédé de fabrication d'une machine électrique tournante selon l'une des revendications précédentes, au moins l'un des logements (3) recevant une pluralité d'aimants permanents (2).

5. Procédé de fabrication d'une machine électrique tournante selon l'une quelconque des revendications précédentes, les logements (3) ayant chacun, en section transversale perpendiculairement à l'axe de rotation (Q) de la machine électrique tournante, une forme générale allongée suivant un axe (X), l'axe (X) étant de préférence sensiblement parallèle aux faces polaires (2a) du ou des aimants permanents (2) reçus dans le logement (3).

6. Procédé de fabrication d'une machine électrique tournante selon la revendication précédente, les logements (3) présentant, en section transversale perpendiculairement à l'axe de rotation (Q) de la machine électrique tournante, au moins un ergot (4) de serrage, par aimant (2), sur chacun des côtés opposés (3a) du logement (3) de part et d'autre de l'axe (X), les ergots (4) de serrage situés sur les côtés opposés (3a) d'un même logement (3) se faisant face.

7. Procédé de fabrication d'une machine électrique tournante selon la revendication précédente, les logements (3) présentant, en section transversale perpendiculairement à l'axe de rotation (Q) de la machine électrique tournante, au moins deux ergots (4) de serrage, par aimant permanent (2), sur chacun des côtés opposés (3a) du logement (3) de part et d'autre de l'axe (X).

8. Procédé de fabrication d'une machine électrique tournante selon l'une quelconque des revendications précédentes, la distance (*e*) entre le sommet (S) d'un ergot (4) de serrage et l'extrémité longitudinale (7) adjacente de l'aimant permanent (2) à son contact étant supérieure ou égale à *l*/5, où *l* désigne la longueur de l'aimant permanent (2).

9. Procédé de fabrication d'une machine électrique tournante selon l'une quelconque des revendications précédentes, les ergots (4) de serrage étant de forme arrondie ou tronquée à leur sommet (*S*) avant la mise en place des aimants permanents (2), les ergots (4) de serrage étant en contact avec les aimants permanents (2) par leur sommet (*S*).

10. Procédé de fabrication d'une machine électrique tournante selon l'une quelconque des revendications précédentes, les ergots (4) de serrage situés sur les côtés opposés (3a) d'un même logement (3) se faisant face.

11. Procédé de fabrication d'une machine électrique tournante selon l'une quelconque des revendications précédentes, la distance (*d*) entre le sommet (*S*) d'un ergot (4) et le côté (3a) du logement (3) auquel se raccorde ledit ergot (4) de serrage étant, avant la mise en place des aimants permanents (2), comprise entre 0,25 mm et 0,35 mm, les ergots (4) de serrage étant de préférence de rayon de courbure compris entre 0,1 mm et 5 cm.

12. Procédé de fabrication d'une machine électrique tournante selon l'une quelconque des revendications précédentes, les ergots (4) de serrage étant présents sur chaque tôle (9) de l'empilement de tôles magnétiques, de façon à se superposer.

13. Procédé de fabrication d'une machine électrique tournante selon l'une quelconque des revendications 1 à 11, une tôle (9) sur *n* dans l'empilement, où *n* est un entier supérieur à 1, présentant des ergots (4), avec *n* de préférence égal à 2, 3 ou 4.

14. Procédé de fabrication d'une machine électrique tournante selon l'une quelconque des revendications précédentes, au moins un logement (3) présentant au moins une butée (5), contre laquelle vient en appui par une extrémité longitudinale (7) un aimant permanent (2) reçu dans ledit logement (3).

15. Machine électrique tournante fabriquée par un procédé selon l'une quelconque des revendications précédentes.

## Patentansprüche

1. Verfahren zur Herstellung einer drehenden elektrischen Maschine, die Folgendes aufweist:
- eine Rotor-Magnetmasse (1), die von einem Stapel aus Magnetblechen (9) gebildet ist, die übereinander angeordnet sind und Aufnahmen (3) aufweisen,
- eine Mehrzahl von Dauermagneten (2) aus einem Material, das härter ist als der Stapel aus Magnetblechen (9), die in die Aufnahmen (3) eingefügt sind, wobei die Aufnahmen (3) eine Mehrzahl von Nasen (4) zur Klemmung der Dauermagneten (2) in den Aufnahmen (3) aufweisen,
wobei bei dem Verfahren die Klemmnasen (4) der Magnetbleche (9) an ihrem Scheitelpunkt von den Dauermagneten (2) beim Einfügen der Dauermagneten (2) in die Aufnahmen (3) beschnitten werden, wobei die Dauermagneten (2) scharfe Kanten aufweisen und die Dauermagneten (2) in die Aufnahmen (3) eingepresst werden und an ihren Längsenden nicht mit den Magnetblechen (9) in Kontakt stehen, um den Beschnitt der Klemmnasen (4) zu erleichtern.

2. Verfahren zur Herstellung einer drehenden elektrischen Maschine nach dem vorhergehenden Anspruch, wobei die Klemmnasen (4) durch Beschnitt der Magnetbleche (9) gebildet werden.

3. Verfahren zur Herstellung einer drehenden elektrischen Maschine nach Anspruch 1 oder 2, wobei die Dauermagneten (2) aus Ferrit sind.

4. Verfahren zur Herstellung einer drehenden elektrischen Maschine nach einem der vorhergehenden Ansprüche, wobei wenigstens eine der Aufnahmen (3) eine Mehrzahl von Dauermagneten (2) aufnimmt.

5. Verfahren zur Herstellung einer drehenden elektrischen Maschine nach einem der vorhergehenden Ansprüche, wobei die Aufnahmen (3) jeweils im Querschnitt senkrecht zur Drehachse (Q) der drehenden elektrischen Maschine eine längliche allgemeine Form entlang einer Achse (X) aufweisen, wobei die Achse (X) vorzugsweise im Wesentlichen parallel zu den Polflächen (2a) des oder der Dauermagneten (2) verläuft, die in der Aufnahme (3) aufgenommen sind.

6. Verfahren zur Herstellung einer drehenden elektrischen Maschine nach dem vorhergehenden Anspruch, wobei die Aufnahmen (3) im Querschnitt senkrecht zur Drehachse (Q) der drehenden elektrischen Maschine wenigstens eine Klemmnase (4) pro Magnet (2) auf jeder der gegenüberliegenden Seiten (3a) der Aufnahme (3) beiderseits der Achse (X) aufweisen, wobei die Klemmnasen (4), die sich auf den gegenüberliegenden Seiten (3a) ein und derselben Aufnahme (3) befinden, einander zugewandt sind.

7. Verfahren zur Herstellung einer drehenden elektrischen Maschine nach dem vorhergehenden Anspruch, wobei die Aufnahmen (3) im Querschnitt senkrecht zur Drehachse (Q) der drehenden elektrischen Maschine wenigstens zwei Klemmnasen (4) pro Dauermagnet (2) auf jeder der gegenüberliegenden Seiten (3a) der Aufnahme (3) beiderseits der Achse (X) aufweisen.

8. Verfahren zur Herstellung einer drehenden elektrischen Maschine nach einem der vorhergehenden Ansprüche, wobei der Abstand (*e*) zwischen dem Scheitelpunkt (*S*) einer Klemmnase (4) und dem benachbarten Längsende (7) des Dauermagneten (2) bei dessen Kontakt größer als oder gleich *l*/5 ist, wobei *l* die Länge des Dauermagneten (2) bezeichnet.

9. Verfahren zur Herstellung einer drehenden elektrischen Maschine nach einem der vorhergehenden Ansprüche, wobei die Klemmnasen (4) an ihrem Scheitelpunkt (S) vor dem Einsetzen der Dauermagneten (2) eine abgerundete oder abgeschnittene Form aufweisen, wobei die Klemmnasen (4) über ihren Scheitelpunkt (S) mit den Dauermagneten (2) in Kontakt stehen.

10. Verfahren zur Herstellung einer drehenden elektrischen Maschine nach einem der vorhergehenden Ansprüche, wobei die Klemmnasen (4), die sich auf den gegenüberliegenden Seiten (3a) ein und derselben Aufnahme (3) befinden, einander zugewandt sind.

11. Verfahren zur Herstellung einer drehenden elektrischen Maschine nach einem der vorhergehenden Ansprüche, wobei der Abstand (d) zwischen dem Scheitelpunkt (S) einer Nase (4) und der Seite (3a) der Aufnahme (3), mit der die Klemmnase (4) verbunden wird, vor dem Einsetzen der Dauermagneten (2) zwischen 0,25 mm und 0,35 mm beträgt, wobei die Klemmnasen (4) vorzugsweise einen Krümmungsradius zwischen 0,1 mm und 5 cm aufweisen.

12. Verfahren zur Herstellung einer drehenden elektrischen Maschine nach einem der vorhergehenden Ansprüche, wobei die Klemmnasen (4) auf jedem Blech (9) des Stapels aus Magnetblechen vorhanden sind, so dass sie übereinander angeordnet sind.

13. Verfahren zur Herstellung einer drehenden elektrischen Maschine nach einem der Ansprüche 1 bis 11, wobei ein Blech (9) von *n* im Stapel, wobei *n* eine Ganzzahl größer als 1 ist, Nasen (4) aufweist, wobei *n* vorzugsweise gleich 2, 3 oder 4 ist.

14. Verfahren zur Herstellung einer drehenden elektrischen Maschine nach einem der vorhergehenden Ansprüche, wobei wenigstens eine Aufnahme (3) wenigstens einen Anschlag (5) aufweist, an dem ein Dauermagnet (2), der in der Aufnahme (3) aufgenommen ist, mit einem Längsende (7) anliegt.

15. Drehende elektrische Maschine, die durch ein Verfahren nach einem der vorhergehenden Ansprüche hergestellt ist.

## Claims

1. A method for manufacturing an electric rotary machine comprising:
- a rotor magnetic mass (1), formed by a stack of superimposed magnetic sheets (9) having housings (3),
- a plurality of permanent magnets (2) made of a material that is harder than the stack of magnetic sheets (9) inserted into said housings (3), the housings (3) having a plurality of lugs (4) for clamping the permanent magnets (2) in the housings (3),
in which method the lugs (4) of the magnetic sheets (9) are cut at their tips by the permanent magnets (2) as said permanent magnets (2) are inserted into the housings (3), the permanent magnets (2) having sharp edges, and the permanent magnets (2) are inserted by force into the housings (3) and are not in contact with the magnetic sheets (9) at their longitudinal ends in order to facilitate the cutting of the lugs (4).

2. The method for manufacturing an electric rotary machine as claimed in the preceding claims, in which the lugs (4) are formed by cutting the magnetic sheets (9).

3. The method for manufacturing an electric rotary machine as claimed in claim 1 or 2, the permanent magnets (2) being made of ferrite.

4. The method for manufacturing an electric rotary machine as claimed in any one of the preceding claims, at least one of the housings (3) receiving a plurality of permanent magnets (2).

5. The method for manufacturing an electric rotary machine as claimed in any one of the preceding claims, the housings (3) each having, in cross section perpendicularly to the axis of rotation (Q) of the electric rotary machine, a general elongate shape along an axis (X), the axis (X) preferably being substantially parallel to the polar faces (2a) of the one or more permanent magnets (2) received in the housing (3).

6. The method for manufacturing an electric rotary machine as claimed in the preceding claim, the housings (3) having, in cross section perpendicularly to the axis of rotation (Q) of the machine, at least one lug (4), per magnet (2), on each of the opposite sides (3a) of the housing (3) on either side of the axis (X), the lugs (4) situated on the opposite sides of a same housing (3) facing one another.

7. The method for manufacturing an electric rotary machine as claimed in the preceding claim, the housings (3) having, in cross section perpendicularly to the axis of rotation (Q) of the machine, at least two lugs (4), per magnet (2), on each of the opposite sides (3a) of the housing (3) on either side of the axis (X).

8. The method for manufacturing an electric rotary machine as claimed in any one of the preceding claims, the distance (*e*) between the tip (*S*) of a lug (4) and the adjacent longitudinal end (7) of the magnet (2) in contact therewith being greater than or equal to *l*/5, where *l* denotes the length of the magnet (2).

9. The method for manufacturing an electric rotary machine as claimed in any one of the preceding claims, the lugs (4) being rounded or truncated at their tip (*S*) before the magnets (2) are placed in position, the lugs (4) being in contact via their tip (*S*) with the magnets (2).

10. The method for manufacturing an electric rotary machine as claimed in any one of the preceding claims, the lugs (4) situated on the opposite sides (3a) of a same housing (3) facing one another.

11. The method for manufacturing an electric rotary machine as claimed in any one of the preceding claims, the distance (*d*) between the tip (*S*) of a lug (4) and the side (3a) of the housing (3) to which said lug (4) is connected being, prior to the placement in position of the magnets (2), between 0.25 mm and 0.35 mm, the lugs preferably having a radius of curvature between 0.1 mm and 5 cm.

12. The method for manufacturing an electric rotary machine as claimed in any one of the preceding claims, the lugs (4) being present on each sheet (9) of the stack of sheets so as to superimpose one another.

13. The method for manufacturing an electric rotary machine as claimed in any one of claims 1 to 11, one sheet (9) in *n* in the stack, where *n* is an integer greater than 1, having lugs (4), where *n* is preferably equal to 2, 3 or 4.

14. The method for manufacturing an electric rotary machine as claimed in any one of the preceding claims, at least one housing (3) having at least one stop (5), against which a magnet (2) received in said housing (3) comes to rest via a longitudinal end (7).

15. An electric rotary machine manufactured by a method as claimed in any one of the preceding claims.
